**Europäisches Patentamt**

**European Patent Office**

**Office européen des brevets**

(19)

(11) Veröffentlichungsnummer : **0 072 998**
**B1**

(12) **EUROPÄISCHE PATENTSCHRIFT**

(45) Veröffentlichungstag der Patentschrift :
13.03.85

(21) Anmeldenummer : 82107449.9

(22) Anmeldetag : 16.08.82

(51) Int. Cl.⁴ : **B 01 J 20/28**, H 01 H 1/64

(54) Getterformkörper und Verfahren zu dessen Herstellung.

(30) Priorität : 20.08.81 DE 3133023

(43) Veröffentlichungstag der Anmeldung :
02.03.83 Patentblatt 83/09

(45) Bekanntmachung des Hinweises auf die Patenterteilung : 13.03.85 Patentblatt 85/11

(84) Benannte Vertragsstaaten :
CH DE FR GB LI

(56) Entgegenhaltungen :
DE-A- 1 432 748
DE-B- 3 008 290
US-A- 3 474 600
CHEMICAL ABSTRACTS, Band 81, Nr. 18, 4. November 1974, Seite 64, Nr. 106881a, Columbus, Ohio, USA

(73) Patentinhaber : **Siemens Aktiengesellschaft**
**Berlin und München Wittelsbacherplatz 2**
**D-8000 München 2 (DE)**

(72) Erfinder : **Schreiner, Horst, Prof., Dr.**
**Siebenbürger Strasse 54**
**D-8500 Nürnberg (DE)**
Erfinder : **Rothkegel, Bernhard**
**Königshammerstrasse 82**
**D-8500 Nürnberg (DE)**
Erfinder : **Welser, Josef, Dr.**
**Benediktstrasse 9**
**D-8021 Hohenschäftlarn (DE)**
Erfinder : **Esterl, Robert**
**D-8019 Reinstorf bei Glonn (DE)**

Jouve, 18, rue St-Denis, 75001 Paris, France

## Beschreibung

Die Erfindung bezieht sich auf einen Getterformkörper, welcher als Preßkörper aus einem Pulvergemisch von Aktivkohle, Polyamid und einem Bindemittel gebildet ist. Außerdem bezieht sich die Erfindung auf ein Verfahren zur Herstellung derartiger Getterformkörper.

Getterkörper zum Einsatz in gekapselten elektrischen Bauelementen in Form von Tabletten oder dergleichen sind bereits aus der DE-B 30 08 290 bekannt. Der dort beschriebene Getterkörper enthält neben dem Getterstoff und Polyamid noch Aluminiumstearat und Polycarbonat, wobei zur Herstellung der Gettertabletten zunächst ein erstes Gemisch aus dem Getterstoff und einer Polycarbonatlösung und nach dem Trocknen und Zermahlen dieses ersten Gemisches mit Polyamidpulver und Aluminiumstearat ein zweites Gemisch gebildet wird, aus welchem dann erst die Gettertabletten gepreßt werden können.

Diese bekannten Getterkörper zeigen zwar bereits gute Gettereigenschaften und eine weitgehend zufriedenstellende mechanische Festigkeit. Doch ist einerseits die Herstellung noch relativ umständlich, da sie zu viele Verfahrensschritte umfaßt, andererseits müssen diese Getterkörper nach dem Pressen noch getrommelt werden, um haftende Partikel zu entfernen und um die Tabletten zu entgraten. Außerdem zeigen diese bekannten Getterkörper Schwankungen in den Gettereigenschaften infolge von Gewichtsschwankungen und Schwankungen in der Gleichmäßigkeit der Zusammensetzung. Auch konnten Risse in den Getterkörpern senkrecht zur Preßrichtung nicht immer vermieden werden.

Aufgabe der vorliegenden Erfindung ist es, Getterformkörper mit verbesserter Massengenauigkeit zu erhalten, gleichzeitig deren Getterkapazität zu vergrößern und eine gleichmäßige Getteraktivität der hergestellten Getterkörper zu gewährleisten. Außerdem soll durch die Erfindung das Herstellungsverfahren vereinfacht werden, um insbesondere einen automatischen Fertigungsablauf zu ermöglichen, wobei beim Füllen der Preßform eine Entmischung der Komponenten vermieden und eine Volumenfüllmenge mit enger Massentoleranz erreicht werden kann.

Erfindungsgemäß wird diese Aufgabe dadurch gelöst, daß als Bindemittel Polyäthylenwachs verwendet ist.

Das als Bindemittel verwendete Polyäthylenwachs hat den Vorteil, daß es sich sehr gleichmäßig mit der Aktivkohle-Polyamidpulvermischung vermischen läßt und nach dem Trocknen ein Granulat mit gutem Fließverhalten für die Verarbeitung in einer Preßform ergibt. Die erfindungsgemäßen Getterformkörper können mit enger Massentoleranz hergestellt werden und besitzen eine sehr gleichmäßige stoffliche Zusammensetzung sowie eine hohe Gleichmäßigkeit in den Gettereigenschaften, die im übrigen besser sind als bei bekannten Aktivkohletabletten. Außerdem können die Getterformkörper in der erfindungsgemäßen Zusammensetzung rißfrei gepreßt werden, wobei sie auch nach dem Aushärten noch eine ausreichende Duktilität besitzen, um beispielsweise beim Einpressen in eine Befestigungsnut nicht zu zerbrechen.

Die Gewichtsanteile von Aktivkohlepulver, Polyamidpulver und Polyäthylen liegen zweckmäßigerweise zwischen 20 und 40 % des Gesamtgewichts. Als besonders vorteilhaft haben sich etwa gleichgroße Anteile von je einem Drittel erwiesen.

Das Herstellungsverfahren für die erfindungsgemäßen Getterformkörper läuft zweckmäßigerweise so ab, daß zunächst das Aktivkohlepulver unmittelbar mit Polyamidpulver gemischt wird, daß dieser Mischung in Wasser aufgeschlämmtes Polyäthylenwachs zugesetzt und gleichmäßig verteilt wird, daß dann die Pulvermischung getrocknet und granuliert wird und daß schließlich dieses Granulat zu Formkörpern verpreßt wird. Das Granulat kann zum Teil durch Sieben aus der getrockneten Pulvermasse gewonnen werden, wobei Grobanteile gemahlen werden. Es ist ein weiterer Vorteil der erfindungsgemäßen Zusammensetzung der Getterformkörper, daß bereits durch das Trocknen der Pulvermischung ein hoher Anteil an fließfähigem Granulat entsteht, der unmittelbar verpreßt werden kann, während der Rest in einfacher Weise ebenfalls zu einem Granulat der vorgesehenen Höchstgröße zermahlen werden kann. Für die Herstellung von Getterformkörpern zur Anwendung in Bauelementen wie Relais, die einen Durchmesser von etwa 3 mm haben sollen, hat es sich als zweckmäßig erwiesen, ein Granulat mit einer Teilchengröße von höchstens 0,5 mm Durchmesser zu verpressen.

Um den Getterformkörpern eine erhöhte Festigkeit zu geben, ist in einer besonders vorteilhaften Weiterbildung vorgesehen, daß die gepreßten Formkörper durch eine Wärmebehandlung bei etwa 200 °C an Luft ausgehärtet werden.

Die Erfindung wird nachfolgend an einem Ausführungsbeispiel nochmals erläutert.

Zur Herstellung von Getterformkörpern wurde Aktivkohlepulver der Teilchengröße < 60 μm mit der gleichen Menge Polyamidpulver der Teilchengröße < 160 μm gleichmäßig gemischt. Diese Mischung kann in einer der üblichen Mischeinrichtungen wie Doppelkonus-, Hosenrohr- oder Schaufelmischer durchgeführt werden. Dieser Mischung wurde in Wasser aufgeschlämmtes Polyäthylenwachs zugesetzt und gleichmäßig verrührt. Dabei wurde die wässrige Polyäthylenlösung aus 40 % Feststoff und 60 % Wasser hergestellt. Insgesamt waren die Gewichtsanteile von Aktivkohlepulver, Polyamidpulver und Polyäthylennachs (Feststoff) etwa gleich groß.

Die so gewonnene Pulvermischung wurde auf einem Trockenblech an der Luft getrocknet. Danach wurde der Granulatanteil von < 0,5 mm abgesiebt und der Grobanteil durch Mahlung in einer Zahnscheibenmühle ebenfalls auf eine Teilchengröße von < 0,5 mm gebracht. Dieses Granulat wurde auf einem Trockenpreßautomaten zu zylinderförmigen Teilen mit einem Durchmesser von 3,4 mm und einer Höhe von 1,5 mm verpreßt. Die Massentoleranz derartig automatisch gepreßter Formteile beträgt etwa ± 3 %. Die gewonnenen Preßkörper zeigten keine sichtbaren Risse. Durch eine Wärmebehandlung bei 200 °C an Luft wurden sie während 20 Minuten zu formfesten Körpern ausgehärtet. Zur Festigkeitsprüfung wurden diese Tabletten radial mit 35 N zwischen ebenen Platten belastet, ohne daß sie zerbrachen. Sie weisen damit eine ausreichende Festigkeit auf, so daß sie in schlitzförmige Halterungen ohne Bruch eingedrückt werden können.

Anschließend wurde die Getterwirkung der erfindungsgemäß gewonnenen Getterformkörper geprüft. Dabei wurde eine größere Zahl von Gettertabletten gewogen und anschließend bei 110 °C im Vakuum behandelt. Daraufhin wurden sie in einem verschließbaren Blechgefäß mit Styrol gelagert. Nach 22-stündiger Auslagerungszeit bei Raumtemperatur wurde die Gewichtszunahme der Tabletten ermittelt. Dabei wurde die relative Getterkapazität bei Tabletten, die ein Gewicht von 11 mg aufwiesen, mit 0,3 mg bestimmt. Diese relative Getterkapazität betrug bei gewichtsgleichen Aktivkohletabletten herkömmlicher Arf nur 0,2 mg pro Tablette. Auch die Gettergeschwindigkeit, d. h. die Gewichtsaufnahme nach einer bestimmten Zeit, war bei der erfindungsgemäßen Gettertablette größer als bei Tabletten nach dem Stand der Technik.

## Ansprüche

1. Getterformkörper mit Aktivkohle, welcher als Preßkörper aus einem Pulvergemisch von Aktivkohle, Polyamid und einem Bindemittel gebildet ist, dadurch gekennzeichnet, daß als Bindemittel Polyäthylenwachs verwendet ist.

2. Getterformkörper nach Anspruch 1, dadurch gekennzeichnet, daß die Gewichtsanteile von Aktivkohlepulver, Polyamidpulver und dem Feststoffanteil von Polyäthylenwachs zwischen 20 und 40 Gewichts-% liegen.

3. Getterformkörper nach Anspruch 1 oder 2, dadurch gekennzeichnet, daß die Gewichtsanteile von Aktivkohlepulver, Polyamidpulver und dem Feststoffanteil des Polyäthylenwachses jeweils bei etwa einem Drittel des Gesamtgewichtes liegen.

4. Verfahren zur Herstellung von Getterformkörpern mit Aktivkohle, wobei ein die Aktivkohle enthaltendes Pulver mit Polyamidpulver gemischt und daraus die Formkörper gepreßt werden, dadurch gekennzeichnet, daß das Polyamidpulver unmittelbar mit Aktivkohlepulver gemischt wird, daß dieser Mischung in Wasser aufgeschlämmtes Polyäthylenwachs zugesetzt und gleichmäßig verteilt wird, daß die Pulvermischung getrocknet und granuliert wird, und daß dieses Granulat zu den Formkörpern verpreßt wird.

5. Verfahren nach Anspruch 4, dadurch gekennzeichnet, daß das zur Granulation zugesetzte Polyäthylen mit Wasser im Verhältnis von 40 zu 60 Massenanteilen aufgeschlämmt ist.

6. Verfahren nach Anspruch 4 oder 5, dadurch gekennzeichnet, daß das Granulat vor dem Verpressen gesiebt wird, und daß die verbleibenden Grobanteile gemahlen werden.

7. Verfahren nach einem der Ansprüche 4 bis 6, dadurch gekennzeichnet, daß die Formkörper nach dem Verpressen durch eine Wärmebehandlung bei etwa 200 °C an Luft ausgehärtet werden.

## Claims

1. A moulded getter body with activated carbon, which is formed as a pressed component from a powder mixture consisting of activated carbon, polyamide and a binding agent, characterised in that polyethylene wax is used as the binding agent.

2. A moulded getter body as claimed in Claim 1, characterised in that the amounts by weight of activated carbon powder, polyamide powder, and the solid portion of the polyethylene wax, lie between 20 and 40 % by weight.

3. A moulded getter body as claimed in Claim 1 or Claim 2, characterised in that the amounts by weight of activated carbon powder, polyamide powder and the solid portion of the polyethylene wax, each amount to about one third of the total weight.

4. A process for the production of moulded getter bodies with activated carbon, in which a powder containing the activated carbon is mixed with polyamide powder, from which mixture the moulded bodies are pressed, characterised in that the polyamide powder is directly mixed with activated carbon powder ; that polyethylene wax reduced to a paste with water is added to this mixture and uniformly distributed ; that the powder mixture is dried and granulated ; and that this granulate is pressed to form the moulded bodies.

5. A process as claimed in Claim 4, characterised in that the polyethylene which is added for granulation, is made into a paste with water in the ratio of 40 to 60 by weight.

6. A process as claimed in Claim 4 or Claim 5, characterised in that the granulate is filtered prior to pressing ; and that the remaining coarse components are ground.

7. A process as claimed in one of Claims 4 to 6, characterised in that, after pressing, the moulded bodies are hardened by a heat treatment at about 200 °C in the presence of air.

## Revendications

1. Corps de getter conformé, comprenant du charbon actif et qui est constitué sous la forme d'un corps moulé en un mélange pulvérulent de charbon actif, de polyamide et d'un agent liant, caractérisé en ce que de la cire de polyéthylène est utilisée comme agent liant.

2. Corps de getter conformé suivant la revendication 1, caractérisé en ce que les proportions en poids de poudre de charbon actif, de poudre de polyamide et de la teneur en matière solide de la cire de polyéthylène sont comprises entre 20 et 40 % en poids.

3. Corps de getter conformé suivant la revendication 1 ou 2, caractérisé en ce que les proportions en poids de poudre de charbon actif, de poudre de polyamide et de la teneur en matière solide de la cire de polyéthylène représentent, respectivement, environ un tiers du poids total.

4. Procédé de préparation de corps de getter conformés, avec du charbon actif, une poudre contenant le charbon actif étant mélangée à de la poudre de polyamide et les corps conformés étant fabriqués par moulage, caractérisé en ce qu'il consiste à mélanger la poudre de polyamide directement à la poudre de charbon actif, à ajouter à ce mélange de la cire de polyéthylène en suspension dans l'eau et à la répartir uniformément, à sécher le mélange pulvérulent et à le granuler, et à mouler ce granulé en les corps conformés.

5. Procédé suivant la revendication 4, caractérisé en ce qu'il consiste à mettre le polyéthylène ajouté pour la granulation en suspension dans l'eau dans le rapport de 40 à 60 parties en masse.

6. Procédé suivant la revendication 4 ou 5, caractérisé en ce qu'il consiste à tamiser le granulé avant le moulage et à broyer les parties grossières qui restent.

7. Procédé suivant l'une des revendications 4 à 6, caractérisé en ce qu'il consiste à durcir les corps conformés après le moulage par un traitement thermique à 200 °C environ, dans l'air.